# EUROPEAN PATENT SPECIFICATION

(11) **EP 2 548 753 B1**
(45) Date of publication and mention of the grant of the patent: **13.04.2016**
(21) Application number: 12177405.3
(22) Date of filing: 20.07.2012
(51) Int. Cl.: B60K 1/00

(54) **Reducer with integral electric motor for electric vehicles**
Untersetzungsgetriebe mit integriertem Elektromotor für Elektrofahrzeuge
Réducteur avec moteur électrique intégré pour véhicules électriques

(30) Priority: 22.07.2011 IT BO20110438
(43) Date of publication of application: 23.01.2013
(73) Proprietor: Bonfiglioli Riduttori S.p.A., Calderara di Reno (IT)
(72) Inventor: Torcelli, Andrea, 35139 Padova (IT)
(74) Representative: Bergadano, Mirko

(56) References cited:
- DE-A1- 10 219 921
- DE-A1- 19 840 006
- DE-A1-102009 000 712
- DE-U1- 20 010 563
- JP-A- 59 106 838

## Description

The present invention relates to a reducer with.a built-in electric motor for electric vehicles, such as lift trucks, platform elevator trucks, tow trucks, etc.

Electric drives for vehicles such as lift trucks, for example, are known to feature reducers comprising:
- a central electric motor;
- a first hub fitted with a first drive wheel and having a respective first epicyclic reduction gear; and
- a second hub on the opposite side of the central electric motor to the first hub, fitted with a second drive wheel, and having a respective second epicyclic reduction gear.

Reducers of this sort also comprise a differential assembly and a brake assembly, which are traditionally located on the same side, at the same wheel hub.

Locating both the differential and brake assemblies on the same side, however, poses various problems :
- poor lubrication of critical parts of the differential assembly : because the differential and brake assemblies are both lubricated with oil from the same tank, the brake assembly disks, located upstream from the epicyclic reduction gear and rotating at high speed, prevent free oil flow to the differential assembly, thus greatly increasing the risk of parts of the differential assembly seizing; this risk could be reduced by increasing the oil level in the tank or the viscosity of the oil, but only with negative consequences in terms of power draw, heat balance, and cost;
- high risk of oil contamination by friction material from worn brake disks; and
- high risk of broken mechanical parts of the differential assembly interfering with the actuating system, and so impairing safe operation, of the brake. assembly; in other words, in the event of differential assembly component part failure, component fragments could interfere with the brake disks or at least part of the actuating system, with the result that the brake assembly fails to respond effectively to operator control.

It is a main object of the present invention to provide a reducer with a built-in electric motor, designed to eliminate the above drawbacks, and which at the same time is cheap and easy to produce.

According to the present invention, there is provided a reducer with a built-in electric motor, as claimed in Claim 1 or any one of the Claims depending directly or indirectly on Claim 1.

A preferred, non-limiting embodiment of the present invention will be described by way of example with reference to the accompanying drawings, in which:
Figure 1 shows an overall view of a reducer in accordance with the teachings of the present invention;
Figure 2 shows a large-scale view of a first detail of the Figure 1 reducer;
Figure 3 shows a large-scale view of a. second detail of the Figure 1 reducer.

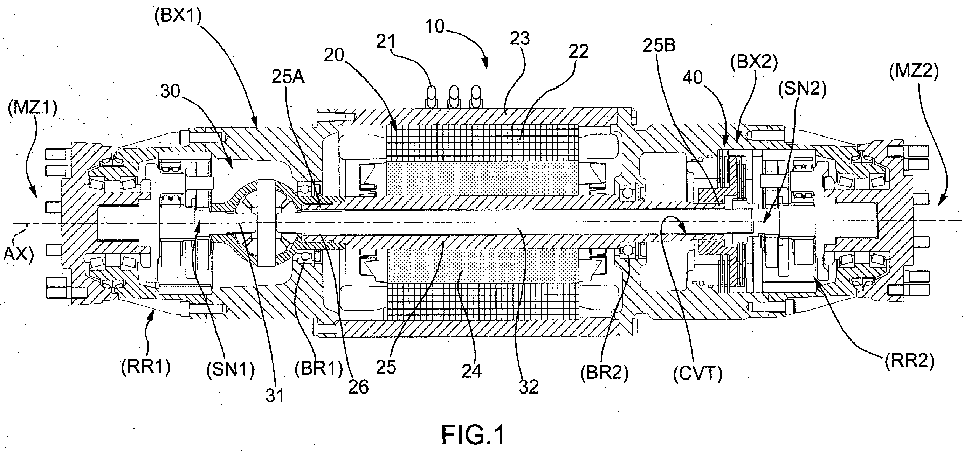

Number 10 in Figure 1 indicates as a whole a reducer with a built-in electric motor for electric vehicles, in accordance with the teachings of the present invention.

Reducer 10 substantially comprises :
- a central electric motor 20, in turn comprising an electric power terminal board 21; a stator 22 fixed to a casing 23; and a rotor 24 housed inside stator 22 in known manner and fitted to a hollow shaft 25 (having a central axis of symmetry (AX));
- a first hub (MZ1) fitted with a first drive wheel (not shown) and having a respective first epicyclic reduction gear (RR1) with a sun gear (SN1); and
- a second hub (MZ2) on the opposite side of central electric motor 20 to first hub (MZ1), fitted with a second drive wheel (not shown), and having a respective second epicyclic reduction gear (RR2) with a sun gear (SN2).

As shown in Figure 1, hollow shaft 25 supporting central electric motor 20 is supported at the ends by two ball bearings (BR1), (BR2), each housed in a respective box (BX1), (BX2).

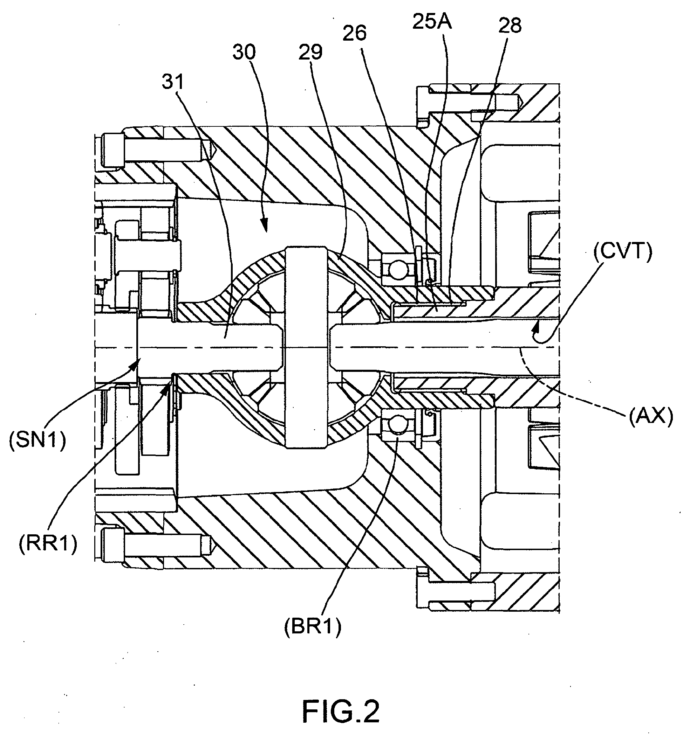

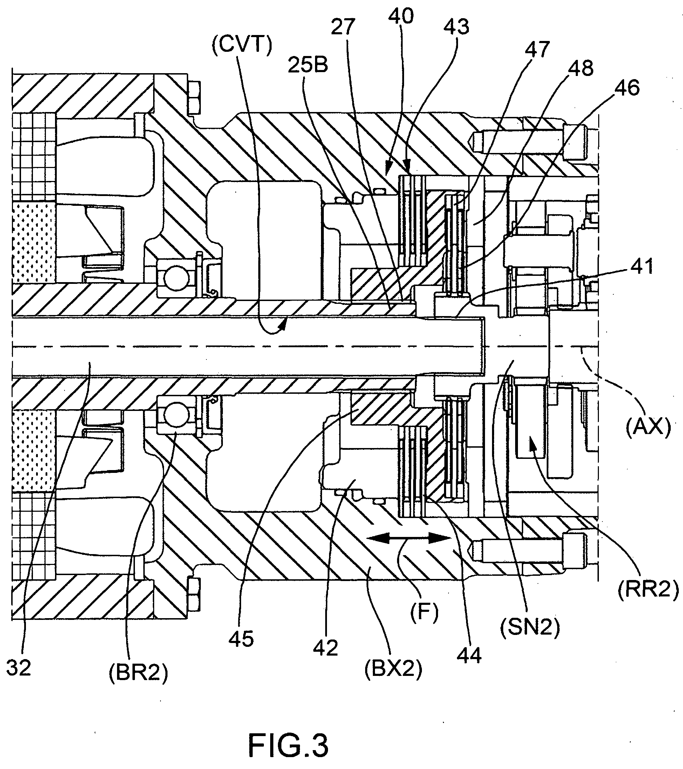

In innovative manner, a differential assembly 30 is located at first hub (MZ1) (Figures 1 and 2), and a brake assembly 40 is located at second hub (MZ2) (Figures 1 and 3).

Both differential assembly 30 and brake assembly 40, however, act on both hubs (MZ1), (MZ2) and therefore on both wheels (not shown).

In other words, unlike known reducers, central electric motor 20 in the present invention separates differential assembly 30 from brake assembly 40.

The ends 25A, 25B of hollow shaft 25 have respective splined profiles 26 (Figure 2), 27 (Figure 3) for the purpose explained below.

As shown in Figure 2, splined profile 26 meshes with teeth 28 formed on the housing 29 of differential assembly 30.

In known manner not described here in detail, differential assembly 30 is connected mechanically on one side to sun gear (SN1) of first epicyclic reduction gear (RR1) by an axle shaft 31, and on the other side to sun gear (SN2) of second epicyclic reduction gear (RR2) by an axle shaft 32 (the central axis of symmetry of which is defined by axis (AX)). Axle shaft 32 is inserted inside a longitudinal cavity (CVT) of hollow shaft 25 to transmit motion from differential assembly 30 (on the left of central electric motor 20 in Figure 1) to brake assembly 40 (on the right of central electric motor 20 in Figure 1).

The braking system employed in reducer 10 comprises one multiple-disk brake assembly 40 requiring one (mechanical or hydraulic) actuation point.

More specifically, and with particular reference to Figure 3, brake assembly 40 comprises :
- an instant-brake piston 42 operated by an actuating system, e.g. a hydraulic actuating system (not shown), and movable along axis (AX) in two opposite directions indicated by two-way arrow (F);
- a first set 43 of outer disks integral with box (BX2);
- a second set 44 of inner disks integral with a sleeve 45, which is slid by piston 42 along splined profile 27 of hollow shaft 25 (in the directions indicated by arrow (F)); the second set 44 of disks alternating with the first set 43 of disks;
- a third set 46 of disks integral with sun gear (SN2) of epicyclic reduction gear (RR2);
- a fourth set 47 of disks projecting inwards of sleeve 45 and alternating with the third set 46 of disks; and
- a stop 48 integral with box (BX2).

When braking, brake assembly 40 according to the present invention therefore performs three functions :
(1) - the first set 43 of outer disks, together with the second set 44 of inner disks, connects hollow shaft 25 integrally to box (BX2) by means of sleeve 45 to brake central electric motor 20 directly, and housing 29 of differential assembly 30 indirectly by means of splined profile 26 at the opposite end of hollow shaft 25;
(2) - together with the fourth set 47 of disks (integral with sleeve 45 and therefore with hollow shaft 25), the third set 46 of disks integral with sun gear (SN2) (in turn integral with axle shaft 32 by means of an inner splined profile) connects axle shaft 32 integrally to housing 29 of differential assembly 30 to lock the differential and so prevent any relative movement of the two wheels, even with the motor and the differential housing locked; and
(3) - the outermost disk in third set 46 connects axle shaft 32 integrally to box (BX2) to produce direct braking action, which is added to the indirect braking action produced as described in point (2).

Moreover, the design of sliding sleeve 45 fitted to hollow shaft 25 provides for also exploiting the braking effect of any resisting forces, such as friction caused by deformation under torque, thus. improving brake response and effectiveness.

The reducer according to the present invention has the main advantages of :
- improving lubrication of the critical parts of the differential assembly subject to wear or seizure, by preventing the rotating brake disks from impairing oil flow and affecting the best oil level;
- preventing contamination of the oil by friction material from worn disks; and
- preventing any broken mechanical parts of the differential assembly from interfering with the actuating system, and so impairing safe operation, of the brake assembly.

## Claims

1. A reducer (10) comprising :
- a central electric motor (20);
- a first hub ((MZ1)) fitted with a first drive wheel; said first hub ((MZ1)) having a respective first epicyclic reduction gear ((RR1));
- a second hub ((MZ2)) on the opposite side of the central electric motor (20) to the first hub ((MZ1)) and fitted with a second drive wheel; said second hub ((MZ2)) having a respective second epicyclic reduction gear ((RR2));
- a differential assembly (30); and
- a brake assembly (40);
said central electric motor (20) separating said differential assembly (30) from said brake assembly (40) ;
said brake assembly (40) comprising one multiple-disk brake assembly (40) with one mechanical or hydraulic actuation point;
and the reducer (10) being **characterized in that** said brake assembly (40) comprises :
- an instant-brake piston (42) operated by an actuating system; said piston (42) being movable along a central axis of symmetry ( (AX) ) and in two opposite directions ((F));
- a first set (43) of outer disks integral with a box ((BX2));
- a second set (44) of inner disks integral with a sleeve (45) slid along said shaft (25) by actuating means (42); the second set (44) of disks alternating with the first set (43) of disks;
- a third set (46) of disks integral with the sun gear ((SN2)) of said second epicyclic reduction gear ((RR2));
- a fourth set (47) of disks projecting inwards of said sleeve (45) and alternating with the third set (46) of disks; and
- a stop (48) integral with said box ((BX2)).

2. A reducer (10) as claimed in Claim 1, **characterized in that** the rotor (24) of said central electric motor (20) is fitted to a shaft (25) having a longitudinal cavity ((CVT)).

3. A reducer (10) as claimed in Claim 2, **characterized in that** the axle shaft (32) of said second epicyclic reduction gear ((RR2)) is inserted inside said longitudinal cavity ((CVT)).

## Patentansprüche

1. Untersetzungsgetriebe (10), welches Folgendes aufweist:
- einen zentralen Elektromotor (20);
- eine erste Nabe ((MZ1)), die mit einem ersten Antriebsrad ausgerüstet ist; wobei die erste Nabe ((MZ1)) ein entsprechendes erstes epizyklisches Untersetzungsgetriebe ((RR1)) hat;
- eine zweite Nabe ((MZ2)) auf der zur ersten Nabe ((MZ1)) gegenüberliegenden Seite des zentralen Elektromotors (20), die mit einem zweiten Antriebsrad ausgerüstet ist; wobei die zweite Nabe ((MZ2)) ein entsprechendes epizyklisches Untersetzungsgetriebe ((RR2)) hat;
- eine Differentialanordnung (30); und
- eine Bremsenanordnung (40);
wobei der zentrale Elektromotor (20) die Differentialanordnung (30) von der Bremsenanordnung (40) trennt;
wobei die Bremsenanordnung (40) eine Mehrscheibenbremsanordnung (40) mit einem mechanischen oder hydraulischen Betätigungspunkt aufweist;
und wobei das Untersetzungsgetriebe (10) **dadurch gekennzeichnet ist, dass** die Bremsenanordnung (40) Folgendes aufweist:
- einen Sofort-Bremskolben (42), der durch ein Betätigungssystem betätigt wird; wobei der Kolben (42) entlang einer mittleren Symmetrieachse ((AX)) und in zwei gegenüberliegende Richtungen ((F)) bewegbar ist;
- einen ersten Satz (43) von äußeren Scheiben, die mit einer Box bzw. einem Gehäuseteil ((BX2)) integriert sind;
- einen zweiten Satz (44) von inneren Scheiben, die mit einer Hülse (45) integriert sind, die entlang der Welle (25) durch Betätigungsmittel (42) verschiebbar sind; wobei der zweite Satz (44) der Scheiben sich mit dem ersten Satz (43) der Scheiben abwechselt;
- einen dritten Satz (46) von Scheiben, die mit dem Sonnenrad ((SN2)) des zweiten epizyklischen Untersetzungsgetriebes ((RR2)) integriert sind;
- einen vierten Satz (47) von Scheiben, die von der Hülse (45) nach innen vorstehen und sich mit dem dritten Satz (46) von Scheiben abwechseln; und
- einen Anschlag (48), der mit der Box bzw. dem Gehäuseteil ((BX2)) integriert ist.

2. Untersetzungsgetriebe (10) nach Anspruch 1, **dadurch gekennzeichnet, dass** der Rotor (24) des mittigen Elektromotors (20) auf eine Welle (25) gepasst ist, die einen längs verlaufenden Hohlraum ((CVT)) hat.

3. Untersetzungsgetriebe (10) nach Anspruch 2, **dadurch gekennzeichnet, dass** die Achsenwelle (32) des zweiten epizyklischen Untersetzungsgetriebes ((RR2)) in den längs verlaufenden Hohlraum ((CVT)) eingesetzt ist.

## Revendications

1. Réducteur (10) comprenant :
- un moteur électrique central (20) ;
- un premier moyeu ((MZ1)) équipé d'une première roue motrice ; ledit premier moyeu ((MZ1)) ayant un premier engrenage réducteur épicyclique ((RR1)) respectif ;
- un second moyeu ((MZ2)) sur le côté opposé du moteur électrique central (20) au premier moyeu ((MZ1)) et équipé d'une seconde roue motrice ; ledit second moyeu ((MZ2)) ayant un second engrenage réducteur épicyclique ((RR2)) respectif ;
- un ensemble différentiel (30) ; et
- un ensemble frein (40) ;
ledit moteur électrique central (20) séparant ledit ensemble différentiel (30) dudit ensemble frein (40) ; ledit ensemble frein (40) comprenant un ensemble frein multidisque (40) avec un point d'actionnement mécanique ou hydraulique ;
et le réducteur (10) étant **caractérisé en ce que** ledit ensemble frein (40) comprend :
- un piston de frein par contact (42) commandé par un système d'actionnement ; ledit piston (42) étant mobile le long d'un axe de symétrie central ((AX)) et dans deux directions opposées ((F)) ;
- un premier jeu (43) de disques externes faisant partie intégrante d'un boîtier ((BX2)) ;
- un deuxième jeu (44) de disques internes faisant partie intégrante d'un manchon (45) entraîné en coulissement le long dudit arbre (25) par un moyen d'actionnement (42) ; le deuxième jeu (44) de disques alternant avec le premier jeu (43) de disques ;
- un troisième jeu (46) de disques faisant partie intégrante du pignon solaire ((SN2)) dudit second engrenage réducteur épicyclique ((RR2)) ;
- un quatrième jeu (47) de disques saillant vers l'intérieur dudit manchon (45) et alternant avec le troisième jeu (46) de disques ; et
- une butée (48) faisant partie intégrante dudit boîtier ((BX2)).

2. Réducteur (10) selon la revendication 1, **caractérisé en ce que** le rotor (24) dudit moteur électrique central (20) est installé sur un arbre (25) ayant une cavité longitudinale ((CVT)).

3. Réducteur (10) selon la revendication 2, **caractérisé en ce que** l'arbre d'essieu (32) dudit second engrenage réducteur épicyclique ((RR2)) est inséré à l'intérieur de ladite cavité longitudinale ((CVT)).
